(19) **Europäisches Patentamt / European Patent Office / Office européen des brevets**

(11) **EP 2 998 725 A1**

(12) **EUROPEAN PATENT APPLICATION**
published in accordance with Art. 153(4) EPC

(43) Date of publication:
**23.03.2016 Bulletin 2016/12**

(51) Int Cl.:
**G01N 21/35** (2014.01)   **G01N 21/359** (2014.01)

(21) Application number: **14807419.8**

(22) Date of filing: **21.05.2014**

(86) International application number:
**PCT/JP2014/063501**

(87) International publication number:
**WO 2014/196363 (11.12.2014 Gazette 2014/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **07.06.2013   JP 2013121099**

(71) Applicant: **Konica Minolta, Inc.**
**Tokyo 100-7015 (JP)**

(72) Inventors:
• **HARADA, Koji**
**Tokyo 100-7015 (JP)**
• **ABE, Yoshihisa**
**Tokyo 100-7015 (JP)**
• **MIYA, Ryota**
**Tokyo 100-7015 (JP)**

(74) Representative: **Hoffmann Eitle**
**Patent- und Rechtsanwälte PartmbB**
**Arabellastraße 30**
**81925 München (DE)**

(54) **SPECTROSCOPIC SYSTEM AND METHOD**

(57)    In a spectroscopic analysis system and a spectroscopic analysis method of the present invention, in determining a content percentage of a component contained in a measurement object based on a measurement object spectrum, one or more calibration curves for obtaining the content percentage of the component contained in the measurement object are selected out of a plurality of calibration curves generated based on reference spectra corresponding to a plurality of sections, into which a content percentage of each of a plurality of components is divided, and classified according to the sections using the measurement object spectrum and the reference spectra.

FIG. 4

**Description**

**TECHNICAL FIELD**

The present invention relates to a calibration curve used in spectroscopic analysis.

**BACKGROUND ART**

Conventionally, spectroscopic means utilizing a property that light incident on a substance exhibits a characteristic change according to types of atoms and molecules contained in the substance have been used. For example, there are spectroscopic means such as the measurement of a concentration and a composition (content ratio) of a component contained in a measurement object using a spectrum of reflected light (transmitted light) obtained by irradiating light to the measurement object.

In such spectroscopic analysis, a calibration curve which is an equation representing a relationship between a reference sample with a content ratio of a component evaluated in chemical analysis and a spectrum (reference spectrum) in the case of measuring the reference sample is obtained in advance. Then, a measurement object is measured and a concentration and a content percentage of a component contained in the measurement object are obtained from a spectrum as a measurement result and the calibration curve.

Thus, analysis accuracy differs depending on the accuracy of the calibration curve used. Accordingly, a calibration curve selection method has been proposed to obtain an analysis result with higher accuracy. For example, in patent literature 1, it is proposed to differently use two types of calibration curves, focusing on that it is difficult to obtain an analysis result with high accuracy in the case of using one type of a calibration curve when a measurement range is wide. More specifically, three calibration curves (A, B, C) for obtaining a moisture content percentage are prepared. The calibration curves A, B and C are prepared respectively using reference spectra around a wavelength of 1160 nm, a wavelength of 1450 nm and a wavelength of 1940 nm. The calibration curve A is a calibration curve capable of obtaining a moisture content percentage of 10 to 30 % with rough accuracy, the calibration curve B is a calibration curve capable of obtaining a moisture content percentage of 18 to 30 % with relatively higher accuracy and the calibration curve C is a calibration curve capable of obtaining a moisture content percentage of 10 to 20 % with relatively higher accuracy. First, the measurement object is measured, a rough moisture content percentage (10 to 30 %) is obtained from the measured spectrum using the calibration curve A, and an accurate moisture content percentage is obtained using the calibration curve B when the obtained result is 18 to 30 % and using the calibration curve C when the obtained result is 10 to 20 %. That is, which of the calibration curves B and C having relatively higher accuracy is used is selected based on the calibration curve A having rough accuracy.

However, in reality, the calibration curve for obtaining the content percentage of the component may be affected by a content percentage of another component. In such a case, it may not be possible to obtain an accurate moisture content percentage regardless of which of the calibration curves B and C is selected based on the analysis result using the calibration curve A.

**CITATION LIST**

**PATENT LITERATURE**

Patent literature 1: Japanese Unexamined Patent Publication No. H08-233735

**SUMMARY OF INVENTION**

The present invention was developed in view of the aforementioned situation and aims to provide a spectroscopic analysis system and a spectroscopic analysis method capable of obtaining a calibration curve for calculating a content percentage of each component with higher accuracy when a plurality of components are contained in a measurement object.

In a spectroscopic analysis system and a spectroscopic analysis method according to the present invention, in determining a content percentage of a component contained in a measurement object based on a measurement object spectrum, one or more calibration curves for obtaining the content percentage of the component contained in the measurement object are selected out of a plurality of calibration curves generated based on reference spectra corresponding to a plurality of sections, into which a content percentage of each of a plurality of components is divided, and classified according to the sections using the measurement object spectrum and the reference spectra. Thus, in such spectroscopic analysis system and spectroscopic analysis method, even if a plurality of components are contained in the measurement object, the calibration curve for accurately calculating the content percentage of each component can be obtained.

The above and other objects, features and advantages of the present invention will become more apparent from the following detailed description and the accompanying drawings.

BRIEF DESCRIPTION OF DRAWINGS

FIG. 1 is an overall schematic diagram of a spectroscopic analysis system in an embodiment,
FIG. 2 is a horizontal sectional view showing the structure of a spectrophotometer in the spectroscopic analysis system,
FIG. 3 is a vertical sectional view showing the structure of the spectrophotometer,
FIG. 4 is a functional block diagram of a component amount calculation device in the spectroscopic analysis system,
FIG. 5 is a graph showing a case where a calibration curve is selected only based on a component A,
FIG. 6 is a graph showing a case where a calibration curve is selected based on components A and B in the spectroscopic analysis system,
FIG. 7 is a graph showing an example of the configuration and contents of a calibration curve map of protein in the spectroscopic analysis system,
FIG. 8 is a graph showing an example of the configuration and contents of a calibration curve map of ash in the spectroscopic analysis system,
FIG. 9 is a graph showing an example of the configuration and contents of a search map in the spectroscopic analysis system,
FIG. 10 is a graph showing an SIMCA method,
FIG. 11 is an example of a flow chart of a measurement preparation process in the spectroscopic analysis system,
FIG. 12 is an example of a flow chart of a component amount calculation process in the spectroscopic analysis system, and
FIG. 13 is a graph showing a KNN method.

DESCRIPTION OF EMBODIMENT

Hereinafter, one embodiment according to the present invention is described based on the drawings. Note that parts denoted by the same reference signs in the respective drawings are the same parts and the description thereof is omitted as appropriate. In this specification, parts are denoted by reference signs without suffixes when being collectively called while being denoted by reference signs with suffixes when being individually denoted.

<First Embodiment>

In a spectroscopic analysis system 100 of this embodiment, a calibration curve is selected in consideration of not only a content percentage of a component A, but also that of a component B, focusing on that a calibration curve of the component A may be affected by the content percentage of the component B.

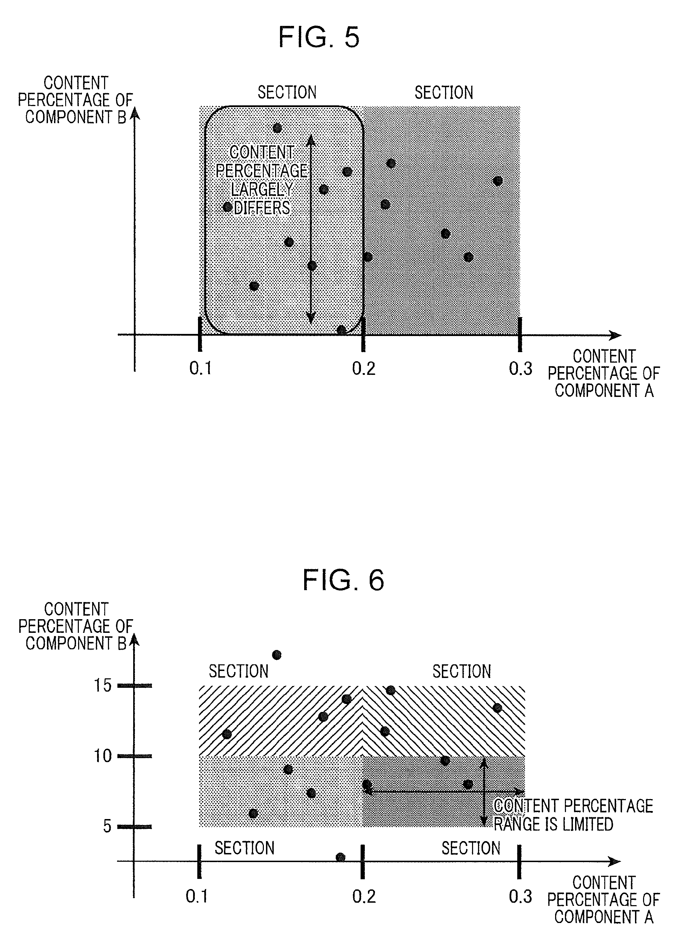

FIG. 5 is a graph showing a case where the calibration curve is selected only in consideration of the component A as a comparative example. As shown in FIG. 5, in the case of using mutually different calibration curves for a case where the component A is 0.1 to 0.2 and a case where the component A is 0.2 to 0.3, the calibration curve of the component A may be affected by the content percentage of the component B and a calculation error of an analysis value of the component A may become large if a range of the content percentage of the component B (see line with arrows on both ends) is large.

Accordingly, in the spectroscopic analysis system 100 of this embodiment, the calibration curve is selected from four calibration curves, further considering two sections composed of a section where the component B is 5 to 10 and a section where the component B is 10 to 15 in addition to the component A, for example, as shown in FIG. 6. That is, since a range of the content percentage of the component B corresponding to one calibration curve is more narrowly limited, the influence of the content percentage of the component B on the analysis value of the component A is smaller when the calibration curve of FIG. 6 is used than when the calibration curve shown in FIG. 5 is used. Thus, an error of the analysis value of the component A is reduced.

This embodiment is described in more detail based on the drawings below.

<Configuration>

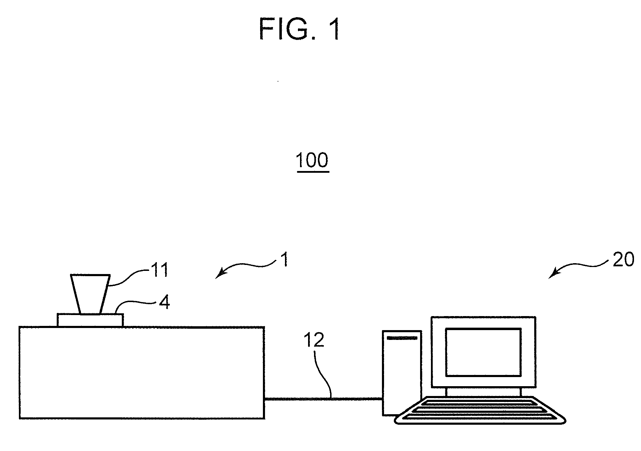

FIG. 1 is an overall schematic diagram of the spectroscopic analysis system 100 in the embodiment. This spectroscopic analysis system 100 includes a spectrophotometer 1 and a component amount calculation device 20. A measurement object is placed into a sample case 11 made of quartz glass. Then, the sample case 11 is set on a sample cup holder 4 and a reflection spectrum of the measurement object is measured by the spectrophotometer 1. The spectrophotometer 1 and the component amount calculation device 20 are connected by an electrical cable 12 and data on a spectrum measured by the spectrophotometer 1 (hereinafter, referred to as a "measured spectrum") is transmitted to the component amount calculation device 20. The component amount calculation device 20 calculates a content percentage of a component from the received measured spectrum and displays it on a screen. Note that the spectrophotometer 1 may be configured to have a function of calculating the content percentage of the component from the measured spectrum and a display function, which functions are provided in the component amount calculation device 20 or may be of a type to measure a measured spectrum of transmitted light from the measurement object.

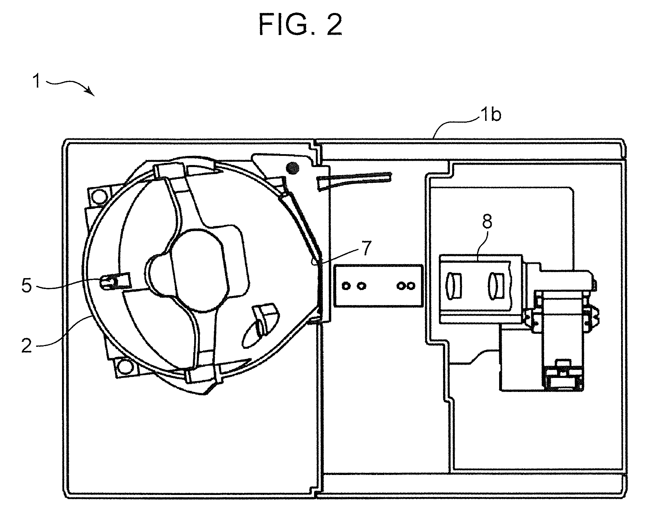

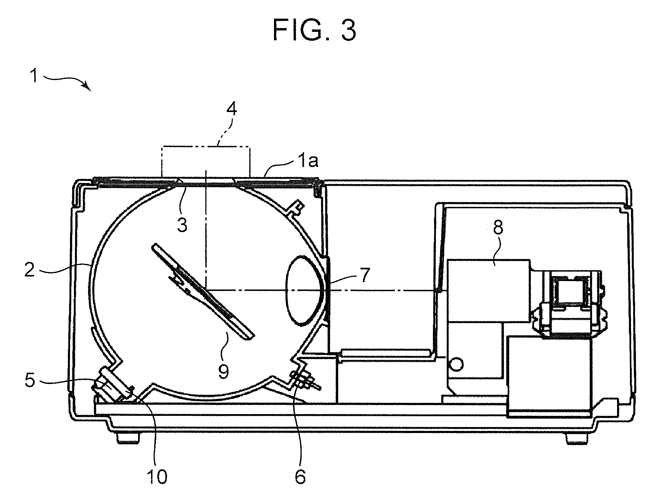

The spectrophotometer 1 is described using FIGS. 2 and 3. FIG. 2 is a horizontal sectional view showing the structure of the spectrophotometer 1. FIG. 3 is a vertical sectional view showing the structure of the spectrophotometer 1.

The spectrophotometer 1 includes an integrating sphere 2, a light source 5 and a light-receiving optical system 8 and, further, a casing (housing) 1b for housing these integrating sphere 2, light source 5 and light-receiving optical system 8.

The casing 1b includes a ceiling plate 1a and is formed with a measurement port (detection opening) 3 communicating with the ceiling plate 1a and the ceiling surface of the integrating sphere 2. The sample case 11 with the measurement object placed therein is set on the sample cup holder 4 to close the measurement port 3 formed on the integrating sphere 2, and optical characteristics such as components of the measurement object are measured. A xenon lamp 10 as an example of the light source 5 and an optical fiber 6 for light source measurement are provided on one surface of the integrating sphere 2. An opening 7 is formed on one side surface of the integrating sphere 2. The light-receiving optical system 8 is arranged in the casing 1b to face this opening 7. Further, a mirror 9 for forming an optical path between the measurement port 3 and the opening 7 is provided in a central part of the integrating sphere 2.

In the thus configured spectrophotometer 1, illumination light from the xenon lamp 10 is irradiated into the integrating sphere 2, scattered in the integrating sphere 2 and illuminates the measurement object in the sample case 11 arranged above the measurement port 3. Then, reflected light from the measurement object by the above illumination is incident on the light-receiving optical system 8 through the opening 7 via the mirror 9. The light-receiving optical system 8 spectrally disperses and detects the incident reflected light and converts it into an electrical signal. That is, the light-receiving optical system 8 detects a spectral distribution of the reflected light by spectrally dispersing the incident reflected light and measuring each wavelength component. As just described, the spectrophotometer 1 obtains a measured spectrum of the reflected light (or transmitted light) from the measurement object irradiated with light in a predetermined wavelength range. In this embodiment, a spectrum in a near infrared region (about 700 to 2500 nm) is detected. This detected spectral spectrum (measured spectrum) is transmitted to the component amount calculation device 20 via the electrical cable 12 connected to an interface unit (not shown) provided in the spectrophotometer 1.

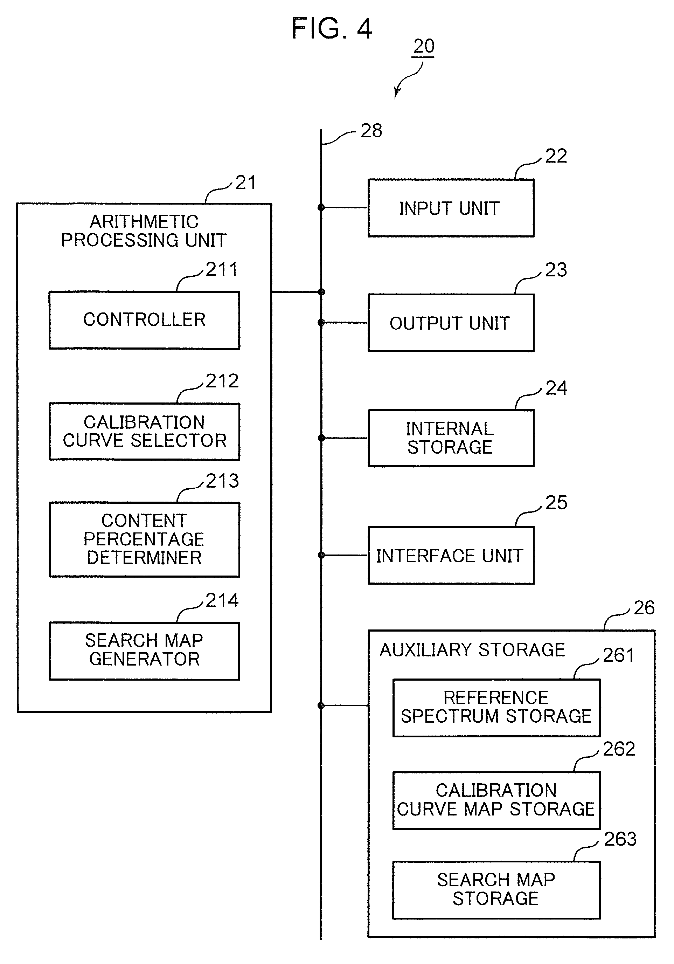

Next, functional blocks of the component amount calculation device 20 are described. FIG. 4 is a functional block diagram of the component amount calculation device in the above spectroscopic analysis system.

In FIG. 4, the component amount calculation device 20 includes an arithmetic processing unit 21, an input unit 22, an output unit 23, an internal storage 24, an interface unit 25, an auxiliary storage 26 and a bus 28.

The arithmetic processing unit 21 is, for example, configured to include a microprocessor, its peripheral circuits and the like and functionally provided with a controller 211, a calibration curve selector 212, a content percentage determiner 213 and a search map generator 214.

The controller 211 calculates a component amount (content percentage of a component) by controlling the calibration curve selector 212, the content percentage determiner 213 and the search map generator 214 and controls the input unit 22, the output unit 23, the internal storage 24, the interface unit 25 and the auxiliary storage 26 in accordance with a control program. The controller 211 also has a function of controlling the operation of the spectrophotometer 1 via the electrical cable 12 in response to an instruction from a measurer input by operating the input unit 22.

The calibration curve selector 212 has a function of selecting a calibration curve optimal for the calculation of the content percentage. More specifically, the calibration curve selector 212 selects one or more calibration curves for obtaining the content percentage of the component contained in the measurement object from the calibration curves stored in the auxiliary storage 26 to be described later using a measured spectrum and reference spectra. Preferably, each reference spectrum is associated with a predetermined region and the calibration curve selector 212 performs pattern mating of the measured spectrum and the reference spectra and selects the calibration curve stored in association with the region associated with the reference spectrum having a high degree of matching. Note that a selection method is more specifically described in the later section < Calibration Curve Selection Method>.

The content percentage determiner 213 has a function of calculating the content percentage of the component contained in the measurement object from the measured spectrum using the calibration curve selected by the calibration curve selector 212. Preferably, if the calibration curve selector 212 selects a plurality of calibration curves, the content percentage determiner 213 determines the content percentage of the component while weighting the content percentages obtained using the plurality of selected calibration curves according to the degree of matching. Note that a content percentage calculation method is more specifically described in the later section <Content Percentage Calculation Method>.

The search map generator 214 has a function of generating a search map to be described later and storing it in a search map storage 263 before the measurement is started. Note that the search map is described in the later section <Calibration Curve Selection Method>.

The input unit 22 is a device for inputting various commands such as a computation start instruction of the component amount calculation device 20 and various pieces of data such as system parameters to the component amount calculation device 20 and, for example, a keyboard, a mouse or the like. The output unit 23 is a device for outputting the commands and data input from the input unit 22, a computation result of the component amount calculation device 20 and the like and, for example, a display device such as a CRT (Cathode Ray Tube) display, an LCD (Liquid Crystal Display), an organic EL (Electro Luminescence) display or a plasma display or a printing device such as a printer.

The internal storage 24 is a so-called working memory for reading a component content percentage calculation program and a control program executed by the arithmetic processing unit 21 from the auxiliary storage 26 and temporarily storing each piece of data during the execution of the component content percentage calculation program and includes, for example, a RAM (Random Access Memory) which is a volatile storage element.

The interface unit 25 is a device connected to the electrical cable 12 and configured to transmit and receive communication signals to and from the spectrophotometer 1 via the electrical cable 12.

The auxiliary storage 26 is a device for storing data and programs such as a ROM (Read Only Memory), an EEPROM (Electrically Erasable Programmable Read Only Memory) or a like nonvolatile storage element or a hard disk and includes a reference spectrum storage 261, a calibration curve map storage 262 and the search map storage 263. The auxiliary storage 26 stores each program (not shown) such as the component content percentage calculation program and the control program for causing the component amount calculation device 20 to operate, data (not shown) necessary to execute each program and the like.

The reference spectrum storage 261 has a function of storing the reference spectra used in generating the calibration curves. More specifically, the reference spectrum storage 261 stores reference spectra in the case of measuring reference samples evaluated by chemical analysis. A graph (equation) showing a relationship between the reference spectra and the reference samples is the calibration curve.

The calibration curve map storage 262 has a function of storing a plurality of calibration curves as a calibration curve map and the search map storage 263 has a function of storing the search map used to select an optimal calibration curve out of the calibration curves stored in the calibration curve map storage 262. The calibration curve map and the search map are described in the later section <Calibration Curve Selection Method>.

These arithmetic processing unit 21, input unit 22, output unit 23, internal storage 24, interface unit 25 and auxiliary storage 26 are respectively connected to the bus 28 so as to be able to exchange data with each other.

Note that the component amount calculation device 20 may further include an external storage (not shown) if necessary. The external storage is a device for reading and/or writing data in and from recording media such as a flexible disc, a CD-ROM (Compact Disc Read Only Memory), a CD-R (Compact Disc Recordable) and a DVD-R (Digital Versatile Disc Recordable) and, for example, a flexible disc drive, a CD-ROM drive, a CD-R drive or a DVD-drive.

If each program is not stored, the component amount calculation device 20 may be configured to install these in the auxiliary storage 26 from the recording medium recording these via the external storage or to download each program via a communication network and the interface unit 25 from a server computer (not shown) which manages these programs. Further, data to be input to the component amount calculation device 20 for the computation of the component amount calculation device 20 may be input to the component amount calculation device 20 via the external storage by a recording medium storing this data or may be input to the component amount calculation device 20 from a client device via the communication network and the interface unit 25.

<Calibration Curve Selection Method>

The calibration curve selection method of the embodiment is described below.

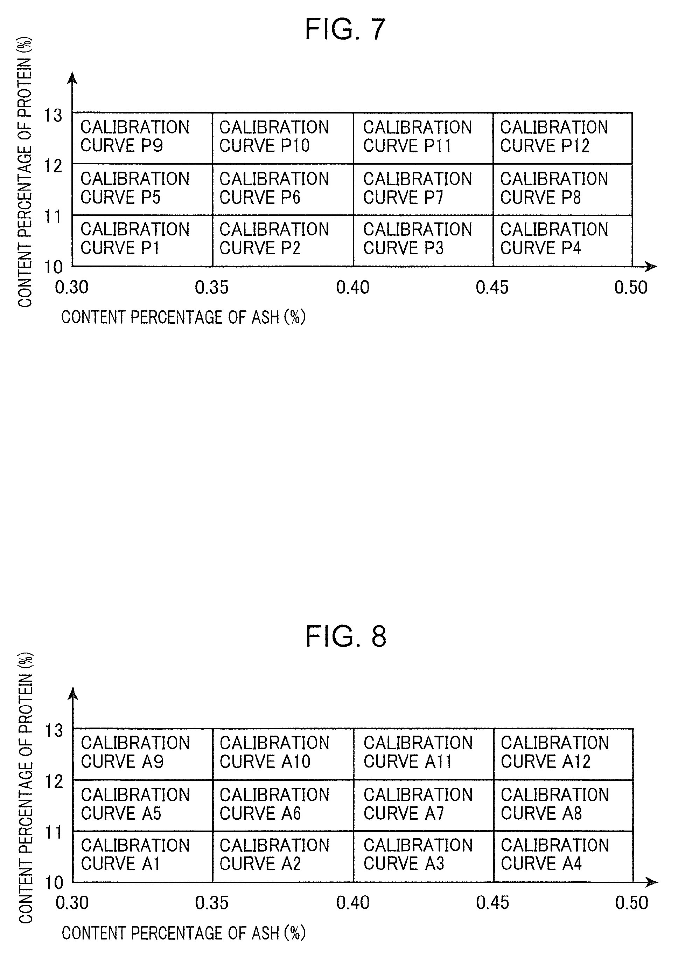

First, the calibration curve map stored in the calibration curve map storage 262 is described using FIGS. 7 and 8. Here, as an example, the measurement object is flour, components for which the content percentage is obtained are two components, i.e. protein and ash, and a range of the content percentage is 10 to 15 % for protein and 0.3 to 0.5 % for ash. A group of calibration curves is obtained in advance with a protein tolerance of 1 % and an ash tolerance of 0.05 % as shown in FIGS. 7 and 8. More specifically, by measuring reference samples whose protein and ash content percentages are known, a calibration curve of protein and a calibration curve of ash are obtained in advance from a group of the reference spectra.

FIG. 7 is a graph showing an example of the configuration and contents of a calibration curve map P of protein.

The calibration curve map P has a two-dimensionally arrayed (matrix) data format representing the content percentage of protein on a vertical axis and the content percentage of ash on a horizontal axis. The content percentage of protein represented on the vertical axis has three sections and the content percentage of ash on the horizontal axis has four sections. Three sections of the content percentage of protein are "not lower than 10 % and below 11 %", "not lower than 11 % and below 12 %" and "not lower than 12 % and below 13 %". Further, four sections of the content percentage of ash are "not lower than 0.30 % and below 0.35 %", "not lower than 0.35 % and below 0.40 %", "not lower than 0.40 % and below 0.45 %" and "not lower than 0.45 % and below 0.50 %".

In the calibration curve map P, the calibration curve for calculating the content percentage of protein in each region is associated with this region (each two-dimensionally arrayed element) where the section of protein and that of ash overlap. "Calibration line P1" to "calibration curve P12" indicate optimal calibration curves to obtain the content percentage of protein in the respective associated regions. For example, the "calibration curve P6" is associated with the region where the section of the content percentage of protein "not lower than 11 % and below 12 %" and the section of the content percentage of ash "not lower than 0.35 % and below 0.40 %" overlap. Thus, in the case of calculating the content percentage of protein of the measurement object whose protein content percentage is not lower than 11 % and below 12 % and whose ash content percentage is not lower than 0.35 % and below 0.40 %, this "calibration curve P6" is an optimal calibration curve, i.e. a calibration curve capable of calculating the content percentage with higher accuracy.

FIG. 8 is a graph showing an example of the configuration and contents of a calibration curve map A of ash. The calibration curve map A has a configuration similar to the calibration curve map P and "calibration line A1" to "calibration curve A12" indicate optimal calibration curves to obtain the content percentage of ash in the respective associated regions. The calibration curves of the calibration curve map A are also generated from the same reference spectrum group as that based on which the calibration curves of the calibration curve map P are generated. For example, the "calibration curve A6" is associated with the region where the section of the content percentage of protein "not lower than 11 % and below 12 %" and the section of the content percentage of ash "not lower than 0.35 % and below 0.40 %" overlap. Thus, in the case of calculating the content percentage of ash of the measurement object whose ash content percentage is not lower than 11 % and below 12 % and whose ash content percentage is not lower than 0.35 % and below 0.40 %, this "calibration curve A6" is an optimal calibration curve, i.e. a calibration curve capable of calculating the content percentage with higher accuracy.

A measurer generates the calibration curve map P and the calibration curve map A and stores them in advance before measuring the content percentages of the measurement object.

Subsequently, the measurer causes the search map generator 214 to generate the search map for searching which of the "calibration curve P1" to "calibration curve P12" of the calibration curve map P and which of the "calibration curve A1" to "calibration curve A12" of the calibration curve map A should be applied to the measured spectrum of the flour and store it in the search map storage 263.

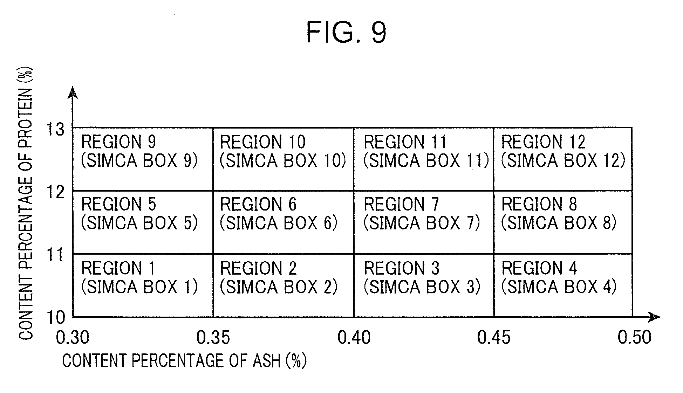

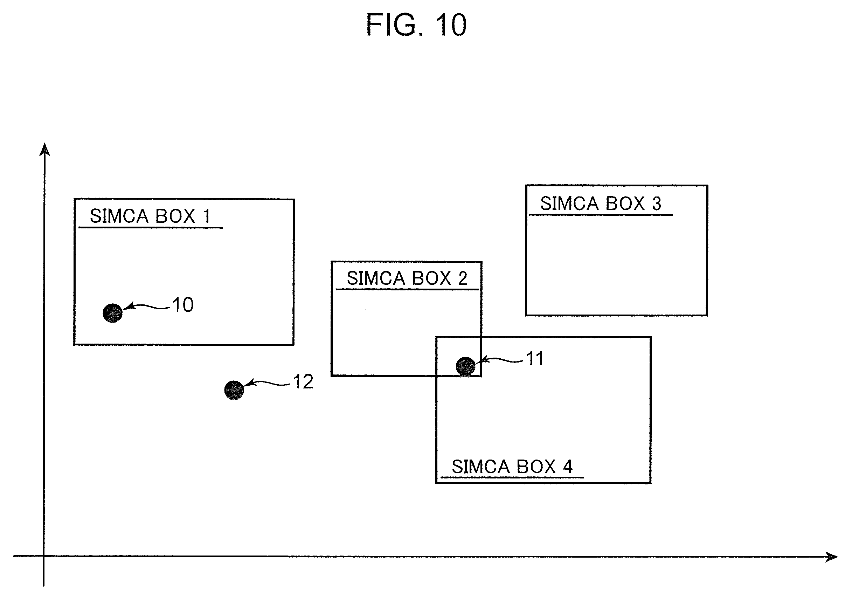

The calibration curve search method is described using FIGS. 9 and 10. Classification by an SIMCA (Soft Independent Modeling of Class Analogy) method as a general multivariable analysis method is applied for search.

Here, FIG. 9 is a graph showing an example of the configuration and contents of the search map. As shown in FIG. 9, regions where the sections of protein and the sections of ash overlap are "region 1" to "region 12" and SIMCA boxes "SIMCA box 1" to "SIMCA box 12" are associated with the respective regions. The search map of FIG. 9 and the SIMCA boxes "SIMCA box 1" to "SIMCA box 12" are stored in the search map storage 263.

First, the SIMCA boxes are generated from the reference spectrum group obtained by measuring a reference sample in the "region 1", i.e. the reference spectrum group based on which the calibration curve P1 (or calibration curve A1) was generated in accordance with the SIMCA method. Similarly, the "SIMCA box 2" to "SIMCA box 12" are generated from the reference spectrum groups of the respective "region 2" to "region 12". FIG. 10 shows an example of the SIMCA boxes. FIG. 10 is a diagram showing a SIMCA space and the SIMCA box 1" to "SIMCA box 4" out of the "SIMCA box 1" to "SIMCA box 12" are shown. Black circles indicate measured spectra. For example, in an example shown in FIG. 10, a measured spectrum 10 belongs to the "SIMCA box 1", a measured spectrum 11 belongs to both the "SIMCA box 2" and the "SIMCA box 4" and a measured spectrum 12 belongs to none of the "SIMCA box 1" to "SIMCA box 12".

At the time of measuring the measurement object, the calibration curve in which section is optimally used for the measured flour is determined based on which of the "SIMCA box 1" to "SIMCA box 12" the measured spectrum of the flour belongs to. More specifically, the region corresponding to the belonging SIMCA box is searched from the search map (FIG. 9) and the calibration curve corresponding to the region searched out of the "region 1" to "region 12" is selected and the content percentage of protein or ash is calculated using this selected calibration curve. In the case of calculating the content percentage of protein, any one of the "calibration curve P1" to "calibration curve P12" corresponding to the searched region is used. In the case of calculating the content percentage of ash, any one of the "calibration curve A1" to "calibration curve A12" corresponding to the searched region is used.

Note that although the calibration curve is searched using the SIMCA method in this embodiment, another method may be used. For example, a KNN (K-Nearest Neighbor analysis) method may be used.

First, the respective reference spectra used to generate the calibration curves corresponding to each of the "region 1" to "region 12" of FIG. 9 are set as "reference spectrum group SG1" to "reference spectrum group SG12".

Norms of a measured spectrum S of the flour for which the component values are checked and reference spectra SGSP belonging to the "reference spectrum group SG1" to "reference spectrum group 12" are calculated. Upper five reference spectra SGSP from the one having a smallest norm are selected.

The region corresponding to the reference spectrum group SG having most reference spectra SGSP out of the reference spectrum groups SG to which the selected upper five reference spectra SGSP belong is set as the searched region.

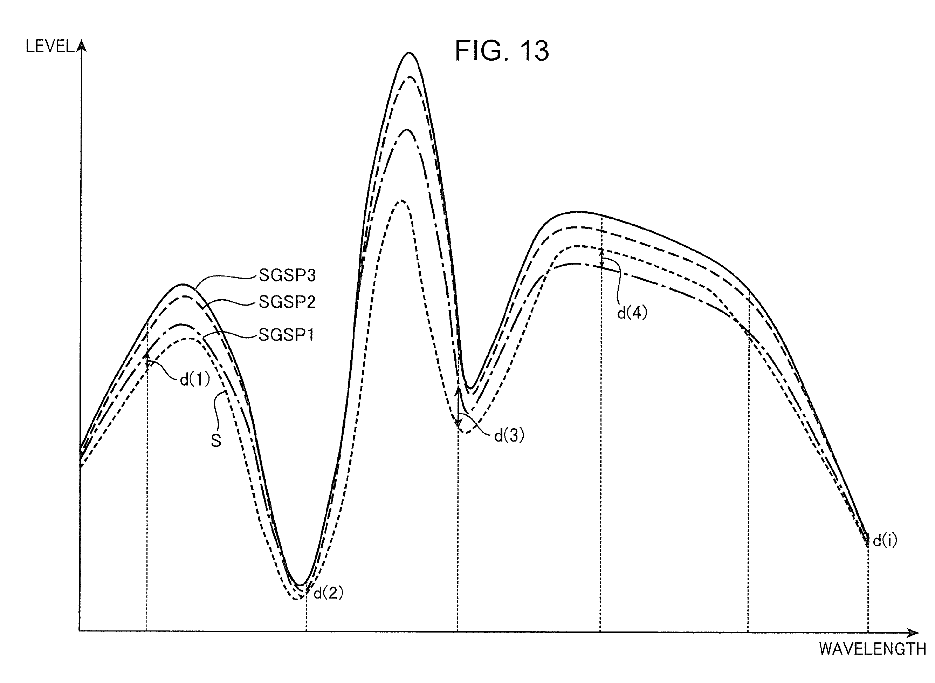

For example, as shown in FIG. 13, distances d between the measured spectrum S and the reference spectra SGSP1, SGSP2 and SGSP 3 are obtained in a predetermined cycle, and norms Dist of the respective reference spectra SGSP 1, SGSP 2 and SGSP 3 are calculated using the following Equation (2). The predetermined cycle is, for example, a sampling pitch of the spectrophotometer 1. Here, i is a wavelength and $\Sigma^i$ is an operator for calculating the sum of d(i) for the wavelength i.

$$\text{Dist} = \Sigma^i d(i) \qquad \ldots (2)$$

The norms Dist are obtained for the reference spectra SGSP belonging to the "reference spectrum group SG1" to "reference spectrum group 12" and upper five reference spectra SGSP from the one having a smallest norm Dist are selected. If the reference spectrum group SG having most reference spectra SGSP is the "reference spectrum group SG1" out of the reference spectrum groups SG to which the five reference spectra SGSP belong, the corresponding "region 1" is set as the searched region.

That is, the measured spectrum and the reference spectra are pattern-matched using the SIMCA method or the KNN method and the calibration curve generated using the reference spectrum approximate to the measured spectrum is selected.

<Content Percentage Calculation Method>

After the calibration curve is selected in the above section <Calibration Curve Selection Method>, the content percentage of the component is calculated from the measured spectrum and the selected calibration curve. For example, if the measured spectrum belongs to one SIMCA box and one calibration curve is selected as in the case of the measured spectrum 10 shown in FIG. 10, the content percentage of the component is calculated using that calibration curve. Further, if the measured spectrum, for example, belongs to none of the SIMCA boxes as in the case of the measured spectrum 12 shown in FIG. 10, it is judged that the content percentage of the component cannot be measured. Here is described a component content percentage calculation method in the case where the measured spectrum belongs to two SIMCA boxes, i.e. a plurality of calibration curves were selected as in the case of the measured spectrum 11 shown in FIG. 10.

In this embodiment, if the measured spectrum belongs to a plurality of SIMCA boxes, each calibration curve is selected from each belonging SIMCA box. The content percentages of protein or ash are obtained using the respective calibration curves and an average value of the respective obtained content percentages is set as a content percentage of a final measurement result. For example, in the case of the measured spectrum 11 shown in FIG. 10, this measured spectrum 11 is found to correspond to the "region 2" and "region 4" from the search map of FIG. 9 since belonging to the "SIMCA box 2" and "SIMCA box 4". Thus, in the case of calculating the content percentage of protein, the "calibration curve P2" and "calibration curve P4" are selected from the calibration curve map P of FIG. 7. Then, an average value of the content percentage calculated using the "calibration curve P2" and that calculated using the "calibration curve P4" is determined as the content percentage of protein. Further, in the case of calculating the content percentage of ash, the "calibration curve A2" and "calibration curve A4" are selected from the calibration curve map A of FIG. 8. Then, an average value of the content percentage calculated using the "calibration curve A2" and that calculated using the "calibration curve A4" is determined as the content percentage of ash.

Note that although simple averaging is used as a method for specifying the content percentage of the component from the plurality of calibration curves in the embodiment, the content percentage may be determined by another method. That method is, for example, a method for calculating weight coefficients.

For example, it is assumed that the measured spectrum S belongs to the "SIMCA box n" and "SIMCA box m" and the "calibration curve Pn" and "calibration curve Pm" correspond to the "SIMCA box n" and "SIMCA box m". The respective content percentages of the component calculated from the measured spectrum S using the respective "calibration curve Pn" and "calibration curve Pm" are assumed to be a content percentage VPn and a content percentage VPm.

An average spectrum SGnSP (Ave) of the reference spectrum group SGn corresponding to the SIMCA box n is obtained and, similarly, an average spectrum SGmSP (Ave) of the reference spectrum group SGm corresponding to the SIMCA box m is obtained.

Then, a correlation coefficient Cn between the measured spectrum S and the average spectrum SGnSP(Ave) and a correlation coefficient Cm between the measured spectrum S and the average spectrum SGmSP(Ave) are obtained and a content percentage VP is calculated using the following Equation (1)

$$VP = (Cn \times VPn + Cm \times VPm) \div (Cn + Cm) \qquad \dots(1)$$

<Operation>

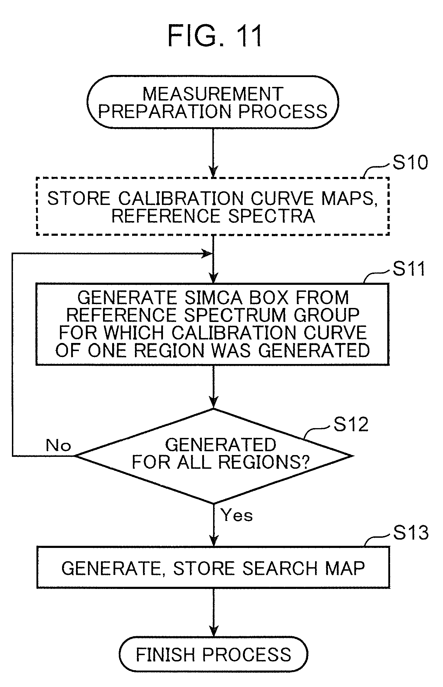

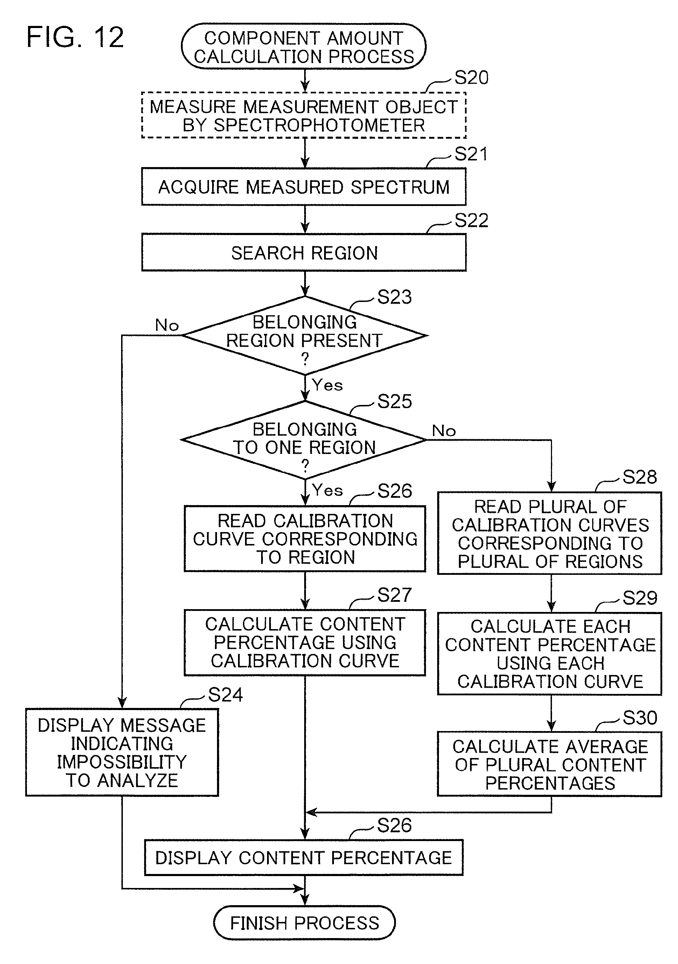

Next, the operation of the spectroscopic analysis system in this embodiment is described using FIGS. 11 and 12.

FIG. 11 is a flow chart of a measurement preparation process in the spectroscopic analysis system 100 and FIG. 12 is a flow chart of a component content percentage calculation process in the spectroscopic analysis system 100. Note that processings indicated by broken line rectangles are processings performed in advance.

First, the measurement preparation process is described using FIG. 11. It is assumed that the calibration curve map P (see FIG. 7) and the calibration curve map A (see FIG. 8) are stored in the calibration curve map storage 262 and the reference spectra used in obtaining the respective calibration curves of the calibration curve map P and the calibration curve map A are stored in the reference spectrum storage 261 before this measurement preparation process is started (Step S10).

The measurer inputs a command to instruct the start of the measurement preparation process and the like using the input unit 12.

The controller 211 of the component amount calculation device 20 having received the input of the command to instruct the start of the measurement preparation process via the input unit 12 requests the search map generator 214 to generate the search map. The search map generator 214 having received the request generates the search map shown in FIG. 5. More specifically, the reference spectrum group corresponding to the "region 1", i.e. the reference spectrum group used to obtain the "calibration curve 1" of the calibration curve map P is read from the reference spectrum storage 261 of the auxiliary storage 26. Then, the search map generator 214 generates the SIMCA box and associates this generated "SIMCA box 1" with the "region 1" of the search map as described above (Step S11). The search map generator 214 performs the processing of Step S11 for all the regions from the "region 1" to "region 12" (Step S12: No).

After generating the "SIMCA box 1" to "SIMCA box 12" corresponding to the regions from the "region 1" to "region 12" and associating them to the respective regions of the search map (Step S12: Yes), the search map generator 214 stores these generated "SIMCA box 1" to "SIMCA box 12" and the search map in the search map storage 263 (Step S13) and finishes the process.

Next, the component amount (component content percentage) calculation process is described using FIG. 12.

The measurer scoops the flour as the measurement object into the sample cup 11 and places the sample cup 11 on the sample holder 4. Then, the measurer controls the spectrophotometer 1 by means of the component amount calculation device 20 and causes the light source 5 to emit light and causes reflected light from the flour to be incident on the light-receiving optical system 8. At this time, to reduce measuring irregularity due to the particle size of the flour, the sample holder 4 automatically rotates when the light source 5 emits light to the sample cup 11. The light-receiving optical system 8 converts the incident reflected light into a measured spectrum (electrical signal) by an electrical circuit and transmits the measured spectrum to the component amount calculation device 20 via the electrical cable 12 connected to the interface unit (not shown) provided in the spectrophotometer 1 (Step S20).

The controller 211 of the component amount calculation device 20 receives the measured spectrum via the electrical cable 12 and the interface unit 25 (Step S21). The controller 211 having received the measured spectrum requests the calibration curve selector 212 to select the calibration curve optimal for the received measured spectrum.

The calibration curve selector 212 having received the request refers to the "SIMCA box 1" to "SIMCA box 12" stored in the search map storage 263 and applies the measured spectrum to the "SIMCA box 1" to "SIMCA box 12" to determine the SIMCA box to which the measured spectrum belongs, i.e. to which of the "SIMCA box 1" to "SIMCA box 12" the measured spectrum belongs (Step S22).

If there is no belonging SIMCA box (region) (Step S23: No), the calibration curve selector 212 notifies it to the controller 211. The controller 211 having received the notification causes the output unit 23 to display a message "No corresponding calibration curve (analysis impossible)." (Step S24) and finishes the process.

If there is any belonging SIMCA box (region) (Step S23: Yes) and the number of the belonging SIMCA box(s) is one (Step S25: Yes), the calibration curve selector 212 reads the calibration curve Pn and the calibration curve An corresponding to the SIMCA box (region) to which the measured spectrum is determined to belong from the calibration curve map P and the calibration curve Map A stored in the calibration curve map storage 262 and transfers them to the content percentage determiner 213 (Step S26). More specifically, the calibration curve selector 212 obtains the region corresponding to the SIMCA box to which the measured spectrum belongs by referring to the search map (FIG. 9) and reads the calibration curve Pn and the calibration curve An corresponding to the obtained region from the calibration curve map P (FIG. 7) and the calibration curve map A (FIG. 8).

The content percentage determiner 213 having received the calibration curves Pn and An calculates the content percentage of protein from the measured spectrum and the calibration curve Pn, calculates the content percentage of ash from the measured spectrum and the calibration curve An and transfers these calculated protein and ash content percentages to the controller 211 (Step S27).

The controller 211 having received the protein and ash content percentages displays these received protein and ash content percentages on the output unit 23 (Step S26) and finishes the process.

On the other hand, if there are a plurality of belonging SIMCA boxes (regions) in Step S25 (Step S25: No), the calibration curve selector 212 reads a plurality of calibration curves Pn and a plurality of calibration curves An corresponding to the plurality of respective SIMCA boxes, to which the measured spectrum is determined to belong, from the calibration curve map P and the calibration curve map A stored in the calibration curve map storage 262 and transfers them to the content percentage determiner 213 (Step S28).

The content percentage determiner 213 having received the plurality of calibration curves Pn and the plurality of calibration curves An calculates each content percentage of protein from the measured spectrum and each of the plurality of calibration curves Pn, calculates an average of the plurality of calculated content percentages and sets this average as a final protein content percentage. The content percentage determiner 213 calculates each content percentage of ash from the measured spectrum and each of the plurality of calibration curves An, calculates an average of the plurality of calculated content percentages and sets this average as a final ash content percentage. Then, the content percentage determiner 213 transfers these calculated protein content percentage and ash content percentage to the controller 211 (Step S29).

The controller 211 having received the protein and ash content percentages displays these received protein and ash content percentages on the output unit 23 (Step S26) and finishes the process.

As just described, in the spectroscopic analysis system 100, proper calibration curves can be selected and the content percentages of the components can be calculated with higher accuracy.

Note that although the content percentages of protein and ash are used as the sections, to which the calibration curves are applied, in the spectroscopic analysis system 100 of this embodiment, the spectroscopic analysis system 100 may be configured to discriminate which type the measured flour is, using names such as cake flour, all-purpose flour, bread flour and whole-wheat flour and content percentages. Further, areas of production or the like of the flour may be used as the sections.

Further, although the case of two components is described in this embodiment, the number of components for which the calibration curves are divided may be more than two. In this case, calibration curve maps and search maps are classified into n-dimensional matrix-like regions in a n-dimensional space if the number of components is n.

This specification discloses various aspects of technology as described above. Out of those, main technologies are summarized below.

A spectroscopic analysis system according to one aspect includes a spectrum acquirer for acquiring a measurement object spectrum of reflected light or transmitted light from a measurement object irradiated with light in a predetermined wavelength range, a calibration curve storage for storing in advance a plurality of calibration curves generated based on reference spectra corresponding to a plurality of sections, into which a content percentage of each of a plurality of components is divided, and classified according to the sections, a calibration curve selector for selecting one or more calibration curves for obtaining the content percentage of the component contained in the measurement object from the calibration curves stored in the calibration curve storage using the measured spectrum and the reference spectra, and a content percentage determiner for determining the content percentage of the component contained in the measurement object from the measurement object spectrum using the calibration curve(s) selected by the calibration curve selector.

In another aspect, in the above spectroscopic analysis system, the calibration curve storage preferably stores the calibration curves in association with n-dimensional matrix-like regions specified in the sections, into which each axis assigned to each of the plurality of components is divided, in an n-dimensional space in which the number of the plurality of components is n.

In another aspect, in the above spectroscopic analysis system, each of the reference spectra is preferably associated with the region and the calibration curve selector preferably performs pattern matching of the measurement object spectrum and the reference spectra and selects the calibration curve stored in association with the region associated with the reference spectrum having a high degree of matching.

A spectroscopic analysis method according to another aspect is a spectroscopic analysis method used in a spectroscopic analysis system with a calibration curve storage for storing in advance a plurality of calibration curves generated based on reference spectra corresponding to a plurality of sections, into which a content percentage of each of a plurality of components is divided, and classified according to the sections, the method including a spectrum acquisition step of acquiring a measurement object spectrum of reflected light or transmitted light from a measurement object irradiated with light in a predetermined wavelength range, a calibration curve selection step of selecting one or more calibration curves for obtaining the content percentage of the component contained in the measurement object from the calibration curves stored in the calibration curve storage using the measured spectrum and the reference spectra, and a content percentage determination step of determining the content percentage of the component contained in the measurement object from the measurement object spectrum using the calibration curve(s) selected in the calibration curve selection step.

In such spectroscopic analysis system and spectroscopic analysis method, the calibration curve for obtaining the content percentage of the desired component out of the plurality of components contained in the measurement object is selected from the calibration curves classified according to the sections of the content percentage of each component. Thus, the calibration curve less affected by the content percentage of the other component can be used. That is, the above spectroscopic analysis system and spectroscopic analysis method can accurately calculate the content percentage of the component.

In another aspect, in the above spectroscopic analysis system, if the calibration curve selector selects a plurality of calibration curves, the content percentage determiner preferably determines the content percentage of the component by performing weighting according to the degree of matching on each content percentage obtained using the plurality of selected calibration curves.

Such an analysis system performs weighting according to the degree of matching in the case of using the plurality of calibration curves selected using pattern matching, wherefore the content percentage of the component can be obtained with higher accuracy.

This application is based on Japanese Patent Application No. 2013-121099 filed on June 7, 2013, the contents of which are hereby incorporated by reference.

To express the present invention, the present invention has been appropriately and sufficiently described through the embodiment with reference to the drawings above. However, it should be recognized that those skilled in the art can easily modify and/or improve the embodiment described above. Therefore, it is construed that modifications and improvements made by those skilled in the art are included within the scope of the appended claims unless those modifications and improvements depart from the scope of the appended claims.

## INDUSTRIAL APPLICABILITY

According to the present invention, it is possible to provide a spectroscopic analysis system and a spectroscopic analysis method.

## Claims

1. A spectroscopic analysis system, comprising:

   a spectrum acquirer for acquiring a measurement object spectrum of reflected light or transmitted light from a measurement object irradiated with light in a predetermined wavelength range;
   a calibration curve storage for storing in advance a plurality of calibration curves generated based on reference spectra corresponding to a plurality of sections, into which a content percentage of each of a plurality of components is divided, and classified according to the sections;
   a calibration curve selector for selecting one or more calibration curves for obtaining the content percentage of the component contained in the measurement object from the calibration curves stored in the calibration curve storage using the measured spectrum and the reference spectra; and
   a content percentage determiner for determining the content percentage of the component contained in the measurement object from the measurement object spectrum using the calibration curve(s) selected by the calibration curve selector.

2. A spectroscopic analysis system according to claim 1, wherein the calibration curve storage stores the calibration curves in association with n-dimensional matrix-like regions specified in the sections, into which each axis assigned to each of the plurality of components is divided, in an n-dimensional space in which the number of the plurality of components is n.

3. A spectroscopic analysis system according to claim 2, wherein:

   each of the reference spectra is associated with the region; and
   the calibration curve selector performs pattern matching of the measurement object spectrum and the reference spectra and selects the calibration curve stored in association with the region associated with the reference spectrum having a high degree of matching.

4. A spectroscopic analysis system according to claim 3, wherein, if the calibration curve selector selects a plurality of calibration curves, the content percentage determiner determines the content percentage of the component by performing weighting according to the degree of matching on each content percentage obtained using the plurality of selected calibration curves.

5. A spectroscopic analysis method used in a spectroscopic analysis system with a calibration curve storage for storing in advance a plurality of calibration curves generated based on reference spectra corresponding to a plurality of sections, into which a content percentage of each of a plurality of components is divided, and classified according to the sections, comprising:

a spectrum acquisition step of acquiring a measurement object spectrum of reflected light or transmitted light from a measurement object irradiated with light in a predetermined wavelength range;
a calibration curve selection step of selecting one or more calibration curves for obtaining the content percentage of the component contained in the measurement object from the calibration curves stored in the calibration curve storage using the measured spectrum and the reference spectra; and
a content percentage determination step of determining the content percentage of the component contained in the measurement object from the measurement object spectrum using the calibration curve(s) selected in the calibration curve selection step.

# FIG. 1

<u>100</u>

# FIG. 2

# FIG. 3

# FIG. 4

## FIG. 5

CONTENT PERCENTAGE OF COMPONENT B

SECTION        SECTION

CONTENT
PERCENTAGE
LARGELY
DIFFERS

0.1              0.2              0.3   CONTENT
PERCENTAGE OF
COMPONENT A

## FIG. 6

CONTENT PERCENTAGE OF COMPONENT B

15

SECTION              SECTION

10

5

CONTENT PERCENTAGE
RANGE IS LIMITED

SECTION              SECTION

0.1              0.2              0.3   CONTENT
PERCENTAGE OF
COMPONENT A

# FIG. 7

CONTENT PERCENTAGE OF PROTEIN (%)

| | CONTENT PERCENTAGE OF ASH (%) | | | |
|---|---|---|---|---|
| 13 | CALIBRATION CURVE P9 | CALIBRATION CURVE P10 | CALIBRATION CURVE P11 | CALIBRATION CURVE P12 |
| 12 | CALIBRATION CURVE P5 | CALIBRATION CURVE P6 | CALIBRATION CURVE P7 | CALIBRATION CURVE P8 |
| 11 | CALIBRATION CURVE P1 | CALIBRATION CURVE P2 | CALIBRATION CURVE P3 | CALIBRATION CURVE P4 |
| 10 0.30 | 0.35 | 0.40 | 0.45 | 0.50 |

CONTENT PERCENTAGE OF ASH (%)

# FIG. 8

CONTENT PERCENTAGE OF PROTEIN (%)

| | CONTENT PERCENTAGE OF ASH (%) | | | |
|---|---|---|---|---|
| 13 | CALIBRATION CURVE A9 | CALIBRATION CURVE A10 | CALIBRATION CURVE A11 | CALIBRATION CURVE A12 |
| 12 | CALIBRATION CURVE A5 | CALIBRATION CURVE A6 | CALIBRATION CURVE A7 | CALIBRATION CURVE A8 |
| 11 | CALIBRATION CURVE A1 | CALIBRATION CURVE A2 | CALIBRATION CURVE A3 | CALIBRATION CURVE A4 |
| 10 0.30 | 0.35 | 0.40 | 0.45 | 0.50 |

CONTENT PERCENTAGE OF ASH (%)

# FIG. 9

| | REGION 9<br>(SIMCA BOX 9) | REGION 10<br>(SIMCA BOX 10) | REGION 11<br>(SIMCA BOX 11) | REGION 12<br>(SIMCA BOX 12) |
| | REGION 5<br>(SIMCA BOX 5) | REGION 6<br>(SIMCA BOX 6) | REGION 7<br>(SIMCA BOX 7) | REGION 8<br>(SIMCA BOX 8) |
| | REGION 1<br>(SIMCA BOX 1) | REGION 2<br>(SIMCA BOX 2) | REGION 3<br>(SIMCA BOX 3) | REGION 4<br>(SIMCA BOX 4) |

CONTENT PERCENTAGE OF PROTEIN (%)

CONTENT PERCENTAGE OF ASH (%)

# FIG. 10

EP 2 998 725 A1

# FIG. 11

MEASUREMENT
PREPARATION PROCESS

S10

STORE CALIBRATION CURVE MAPS,
REFERENCE SPECTRA

S11

GENERATE SIMCA BOX FROM
REFERENCE SPECTRUM GROUP
FOR WHICH CALIBRATION CURVE
OF ONE REGION WAS GENERATED

S12

GENERATED
FOR ALL REGIONS?

No

Yes

S13

GENERATE, STORE SEARCH MAP

FINISH PROCESS

FIG. 12

( COMPONENT AMOUNT
CALCULATION PROCESS )

┌─ S20
┆ MEASURE MEASUREMENT OBJECT ┆
┆ BY SPECTROPHOTOMETER ┆

S21
ACQUIRE MEASURED SPECTRUM

S22
SEARCH REGION

S23
BELONGING
REGION PRESENT
?
No ──→

Yes

S25
BELONGING
TO ONE REGION
?
No ──→

Yes ─ S26

S26
READ CALIBRATION
CURVE CORRESPONDING
TO REGION

S28
READ PLURAL OF
CALIBRATION CURVES
CORRESPONDING TO
PLURAL OF REGIONS

S27
CALCULATE CONTENT
PERCENTAGE USING
CALIBRATION CURVE

S29
CALCULATE EACH
CONTENT PERCENTAGE
USING EACH
CALIBRATION CURVE

S24
DISPLAY MESSAGE
INDICATING
IMPOSSIBILITY
TO ANALYZE

S30
CALCULATE AVERAGE
OF PLURAL CONTENT
PERCENTAGES

S26
DISPLAY CONTENT PERCENTAGE

( FINISH PROCESS )

21

FIG. 13

LEVEL

SGSP3
SGSP2
SGSP1

d(1)

S

d(2)

d(3)

d(4)

d(i)

WAVELENGTH

EP 2 998 725 A1

## INTERNATIONAL SEARCH REPORT

| International application No. |
| --- |
| PCT/JP2014/063501 |

A. CLASSIFICATION OF SUBJECT MATTER
*G01N21/35(2014.01)i, G01N21/359(2014.01)i*

According to International Patent Classification (IPC) or to both national classification and IPC

B. FIELDS SEARCHED

Minimum documentation searched (classification system followed by classification symbols)
G01N21/00-21/01, G01N21/17-21/61

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)
JSTPlus/JMEDPlus/JST7580(JDreamIII)

C. DOCUMENTS CONSIDERED TO BE RELEVANT

| Category* | Citation of document, with indication, where appropriate, of the relevant passages | Relevant to claim No. |
| --- | --- | --- |
| Y | JP 8-233735 A (Iseki & Co., Ltd.), 13 September 1996 (13.09.1996), claim 1; paragraphs [0010] to [0014]; fig. 1 (Family: none) | 1-5 |
| Y | JP 2001-188039 A (Ishikawajima-Harima Heavy Industries Co., Ltd.), 10 July 2001 (10.07.2001), claim 1; fig. 1 (Family: none) | 1-5 |
| Y<br>A | JP 7-260682 A (Iseki & Co., Ltd.), 13 October 1995 (13.10.1995), paragraph [0007] (Family: none) | 3,4<br>1,2,5 |

☒ Further documents are listed in the continuation of Box C.          ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>10 June, 2014 (10.06.14) | Date of mailing of the international search report<br>01 July, 2014 (01.07.14) |
| --- | --- |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2014/063501

C (Continuation).   DOCUMENTS CONSIDERED TO BE RELEVANT

| Category* | Citation of document, with indication, where appropriate, of the relevant passages | Relevant to claim No. |
|---|---|---|
| A | JP 4-160349 A  (NKK Corp.),<br>03 June 1992 (03.06.1992),<br>claim 1<br>(Family: none) | 1-5 |
| A | JP 2008-151548 A  (Toyota Motor Corp.),<br>03 July 2008 (03.07.2008),<br>paragraph [0040]; fig. 5<br>(Family: none) | 1-5 |
| A | JP 2009-243968 A  (Toyota Motor Corp.),<br>22 October 2009 (22.10.2009),<br>paragraph [0066]<br>(Family: none) | 1-5 |
| A | JP 2002-139424 A  (Techno Morioka Co., Ltd.),<br>17 May 2002 (17.05.2002),<br>claim 1; fig. 1, 2<br>(Family: none) | 1-5 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H08233735 B

- JP 2013121099 A